# EUROPÄISCHE PATENTSCHRIFT

(11) **EP 0 796 753 B1**
(45) Veröffentlichungstag und Bekanntmachung des Hinweises auf die Patenterteilung: **19.12.2001**
(21) Anmeldenummer: 97250064.9
(22) Anmeldetag: 11.03.1997
(51) Int. Cl.: B60J 1/17, E05F 11/52, B60J 5/04

(54) **Vorrichtung und Verfahren zum Einstellen einer von einem doppelsträngigen Seilfensterheber bewegten rahmenlosen Fensterscheibe durch eine Kippbewegung quer zur Längsachse des Kraftfahrzeugs**
Device and method for adjusting frameless window, wich is driven by a two-run cable window regulator, by a tilting movement perpendicular to the longitudinal axis of the vehicle
Dispositif et méthode pour ajuster une fenêtre sans cadre, entraînée par un lève-vitre à câble à deux boucles, par un basculement perpendiculaire à l'axe longitudinale du véhicule

(30) Priorität: 21.03.1996 DE 19611074
(43) Veröffentlichungstag der Anmeldung: 24.09.1997
(73) Patentinhaber: Brose Fahrzeugteile GmbH & Co. KG, 96450 Coburg (DE)
(72) Erfinder: Wurm, Georg, Rochester Hills, MI 48306 (US); Clements, David, Auburn Hills, Michigan 48326 (US)
(74) Vertreter: Müller, Wolfram Hubertus, Dipl.-Phys.

(56) Entgegenhaltungen:
- DE-A- 3 723 679
- DE-A- 4 122 554
- DE-A- 4 140 574
- DE-A- 4 427 989
- DE-C- 3 613 978
- US-A- 4 956 942

## Beschreibung

Die Erfindung betrifft eine Vorrichtung und ein Verfahren zum Einstellen einer von einem doppelsträngigen Seilfensterheber bewegten rahmenlosen Fensterscheibe eines Kraftfahrzeugs. Sie gewährleistet einen einfachen Einstellvorgang, ohne unerwünschte Spannungen in der Fensterscheibe zu verursachen.

Doppelsträngige Seilfensterheber sind beispielsweise aus der DE-A-44 27 989 bekannt. Es besteht ein Bedarf, die Neigung der Fensterscheibe bei Kraftfahrzeugen mit derartigen Seilfensterhebern derart einzustellen, daß unerwünschte Spannungen in der Fensterscheibe verhindert werden.

Aus der DE-A1 41 22 554 ist eine rahmenlose Fensterscheibe für eine Kraftfahrzeugtür bekannt, die mittels einer auf einem Bolzen geführten Druckfeder um den Bereich der Türbrüstung in Richtung des Fahrzeuginnenraumes, also gegen den Dichtungsbereich, gedrückt wird. Der Nachteil dieser technischen Lösung besteht darin, daß zur Gewährleistung ausreichender Dichtheit bei hohen Geschwindigkeiten vergleichsweise große Kräfte von der Druckfeder aufgebracht werden müssen. Dies hat außerdem entsprechend hohe Reibkräfte zwischen Fensterscheibe und Dichtung unter üblichen Verstellbedingungen zur Folge, so daß ein sehr leistungsstarker Antrieb eingesetzt werden muß.

Aus der FR-A 1 197 209 und der US-PS 4,956,942 sind Einstell- und Arretierungsmittel bekannt, die am unteren Ende einer Fensterführungsvorrichtung einerseits und an der Türkarrosserie andererseits angreifen. Durch eine drehende Stellbewegung eines Gewindebolzens beziehungsweise einer Spindel wird die gewünschte Kippbewegung der Fensterscheibe ausgelöst. Die Einstellposition des in einer Gewindebuchse lagernden Gewindebolzens kann durch eine Kontermutter arretiert werden.

Die voranbeschriebenen Lösungen weisen den Nachteil auf, daß es bei ihrer Anwendung für einen doppelsträngigen Seilfensterheber leicht zu Verspannungen im Material der Fensterscheibe kommen kann, insbesondere dann, wenn zunächst die Einstellung der einen und dann die Einstellung der anderen Führungsschiene des doppelsträngigen Seilfensterhebers erfolgt. Derartige Verspannungen können sogar zum Bruch der Fensterscheibe führen.

Eine weitere Variante zur Einstellung einer rahmenlosen Fensterscheibe beschreibt DE 37 23 679 C2. Sie verwendet einen im Brüstungsbereich der Fahrzeugtür schwenkbar aufgehangenen Aggregateträger, der den Fensterheber und die Mittel zur Scheibenführung trägt. Im mittigen Bereich des Aggregateträgers greift eine motorische Verstelleinrichtung an, die zur Einstellung eines optimalen Kippwinkels der Fensterscheibe verwendet werden kann. Infolge der erforderlichen hohen Verwindungssteifigkeit des Aggregateträgers besitzt die Fahrzeugtür ein elativ großes Gewicht. Auch die aufwendige Verstelleinrichtung beeinflußt die Kosten nennenswert.

Die DE 36 13 978 C1 offenbart eine Kraftfahrzeugtür mit einem Aggregateträger, der mehrere Einbauaggregate, insbesondere eine Fensterführung für eine in einen Hohlraum zwischen dem Aggregateträger und dem Türaußenblech versenkbare Fensterscheibe aufnimmt. Im Bereich des Türbodens sind zwei Verstelleinrichtungen mit Stellschrauben vorgesehen, über die die Fensterführung gegenüber dem Aggregateträger verschwenkbar ist.

Diese Lösung ermöglicht zwar eine determinierte Scheibeneinstellung, jedoch besteht eine erhebliche Gefahr, daß bei einer Scheibeneinstellung mechanische Verspannungen auftreten, die zum Bruch der Scheibe führen können. So erlaubt das nacheinander erfolgende Einstellen der beiden Stellschrauben einem Werker kaum, das kritische Maß der mechanischen Verspannungen richtig einzuschätzen.

Der Erfindung liegt die Aufgabe zugrunde, eine Vorrichtung und ein Verfahren zum Einstellen einer von einem doppelsträngigen Seilfensterheber bewegten rahmenlosen Fensterscheibe durch eine Kippbewegung quer zur Fahrzeugachse zu entwickeln, die eine einfache Einstellung der Fensterscheibe ohne das Risiko von unerwünschten Verspannungen sicher gewährleistet.

Erfindungsgemäß wird die Aufgabe durch die kennzeichnenden Merkmale des Anspruchs 1 gelöst. Der Anspruch 7 7 gibt ein Verfahren zum Einstellen der Kraftfahrzeugfensterscheibe an.

Die Erfindung erlaubt mit einfachen Mitteln die Einstellung der rahmenlosen Fensterscheibe durch eine Stellbewegung der unteren Enden der Führungsschienen des doppelsträngigen Seilfensterhebers quer zur Fahrzeuglängsachse. Erfindungsgemäß erfolgt die Einstellung der einen Führungsschiene durch Mittel, die eine Zwangsverstellung bei ihrer Betätigung bewirken, zum Beispiel durch Schraub- oder Spindelverstellungen. Die andere Führungsschiene ist bei gelöstem Arretierungsmittel innerhalb ihres Einstellbereichs, der vorzugsweise von den Anschlagflächen eines Langlochs eines mit der Führungsschiene verbundenen Befestigungswinkels begrenzt wird, freibeweglich.

Zur Einstellung der Fensterscheibe wird zunächst das Arretierungsmittel der Führungsschiene gelöst, die im gelösten Zustand an der unteren Befestigungsstelle "freibeweglich" ist. Anschließend werden die Mittel zur "Zwangsverstellung" der anderen Führungsschiene so lange betätigt, bis die Fensterscheibe die vorgesehene Position erreicht hat. Dann sollte das Einstellmittel, zum Beispiel eine Einstellschraube, gesichert werden, damit eine unbeabsichtigte Veränderung der Scheibenneigung ausgeschlossen wird. Nun erfolgt die Fixierung der Führungsschienen mit der "freibeweglichen Befestigungsstelle" durch das dafür vorgesehene Arretierungsmittel, zum Beispiel eine Schraube. Erforderlichenfalls kann vor der Arretierung noch eine kleine Korrektur der Lage der betreffenden Führungsschiene vorgenommen werden. Solche Korrekturen aufgrund der Elastizität des Systems aus Fensterheber und Fensterscheibe können angebracht sein, weil eine hundertprozentige Nachführung der einen Befestigungsstelle während der Justage der anderen Befestigungsstelle im allgemeinen ausgeschlossen ist.

Jedoch wird durch die erfindungsgemäße Vorrichtung und das Verfahren zum Einstellen der Fensterscheibe sichergestellt, daß Verspannungen des Systems aus Seilfensterheber und Fensterscheibe während des Einstellvorgangs vermieden werden. Solche Verspannungen sind oft Ursache für eine Schwergängigkeit der Fensterscheibe oder sogar für deren Bruch.

Idealerweise sind die Einstell- und Arretierungsmittel beider Führungsschienen des doppelsträngigen Seilfensterhebers durch den Türboden hindurch betätigbar, um eine einfache Nachjustage der Fensterscheibe zu gewährleisten, ohne die Türinnenverkleidung demontieren zu müssen. Für die Betätigung der Einstellschraube geeignete Mechanismen, welche den Verlauf der Betätigungskraft durch den Türboden hindurch umleiten, sind hinreichend bekannt. Neben kardanischen Gelenken eignen sich auch Kombinationen von Schnecke und Schneckenrad oder von Zahnrädern mit Kegelradverzahnung.

Eine Vorzugsvariante der Erfindung sieht vor, soweit möglich, die Achsen der Seilrollen direkt zur Befestigung in der Fahrzeugtür zu verwenden und so eine verbesserte Krafteinleitung in die Tür unter Umgehung von Hebelwirkungen zu gewährleisten. Dabei sollte eine der unteren Achsen gleichzeitig zur Einstellung der zugeordneten Führungsschiene verwendet werden.

Nachfolgend wird die Erfindung anhand eines Ausführungsbeispiels und der dazugehörigen Figur näher beschrieben.

Sie zeigt in perspektivischer Darstellung einen doppelsträngigen Bowdenrohr-Fensterheber und ausschnittsweise zugehörige Bereiche der Fahrzeugtür.

Die Darstellung zeigt einen sogenannten außenliegenden Fensterheber, das heißt, das mechanische Verstellsystem ist zwischen dem Türaußenblech 1a und der Fensterscheibe 6 angeordnet. Zum Verstellsystem gehören zwei Führungsschienen 4a, 4b, an denen Klemmbefestigungen 40 zur Verbindung mit der Unterkante der Fensterscheibe 6 verschieblich lagern. An den Enden der Führungsschienen 4a, 4b sind Haltewinkel 41, 42, 43, 44 befestigt, an denen über die Achsen 410, 420, 430 Seilrollen (nicht sichtbar) zur Seilumlenkung lagern und die die Enden der Bowdenrohre 3 abstützen. Die für die Kraftübertragung notwendige geschlossene Seilschlaufe erstreckt sich also zwischen den Umlenkrollen entlang der Führungsschienen 4a, 4b, wobei das Seil an zwei Stellen mit den Gleitern der Klemmbefestigungen 40 verbunden ist, und durch die Bowdenrohre 3 zur jeweils anderen Führungsschiene 4a, 4b, beziehungsweise zur Antriebseinheit 2, geleitet wird. Die Antriebskraft wird von einem Motor 21 erzeugt und in ein Getriebe 20 eingeleitet, das eine Seiltrommel enthält. Mehrere Umschlingungen des Seils auf der Seiltrommel und gegebenenfalls einer formschlüssige Verbindung zwischen Seil und Seiltrommel über eine Seilnippeleinhängung gewährleisten die Kraftübertragung auf das Seil. Die Antriebseinheit 2 ist auf einer Grundplatte 22 montiert, die wiederum Befestigungsstellen 220, 221 mit dem Türinnenblech 1b beziehungsweise mit dem Rohr 5 aufweist.

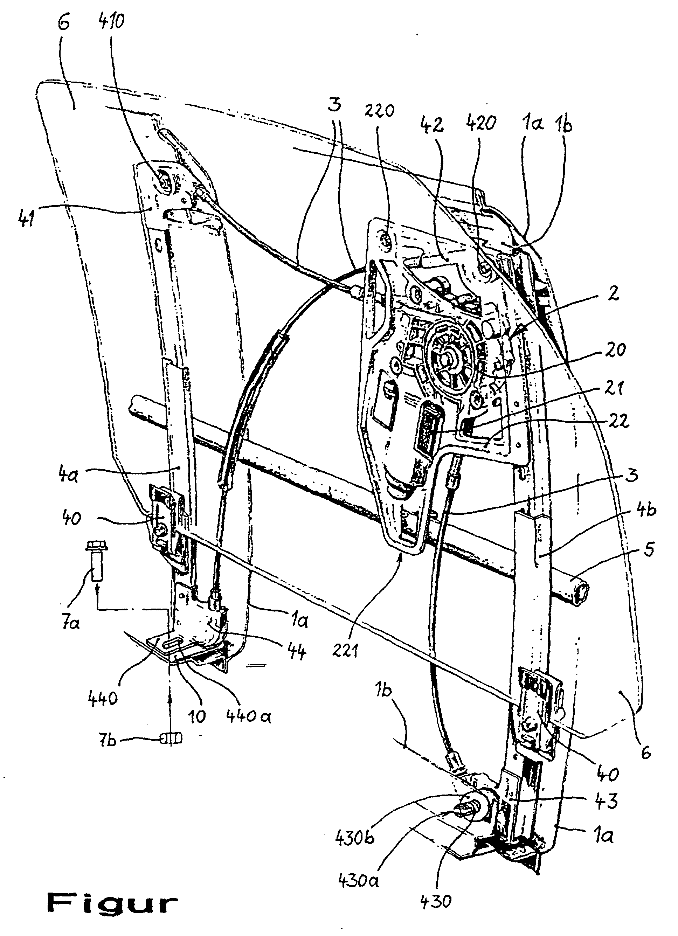

Die Figur zeigt nur schematisch eine der möglichen Ausführungsvarianten der unteren Einstell- und Arretierungsmittel für die Führungsschienen 4a, 4b, wobei der eine Befestigungsbereich innerhalb des möglichen Verstellweges im wesentlichen frei beweglich ist (bei gelöstem Arretierungsmittel), während der andere Befestigungsbereich auch bei gelöster Arretierung nur in dem Maße der Betätigung des Einstellmittels zwangsverstellbar ist.

Der zuerst genannte Befestigungsbereich wird von einem Befestigungswinkel 440 mit einem Langloch 440a sowie einer zugehörigen Bohrung im Bodenblech 10 der Fenstertür gebildet. Eine Schraube 7a durchgreift das Langloch 440a sowie die Bohrung im Bodenblech 10. Eine Mutter 7b dient der Verspannung der Schraubverbindung und somit der Arretierung der Position des mit dem Befestigungswinkel 440 verbundenen Haltewinkels 44, nach dem die vorgesehene Scheibenposition erreicht wurde. Natürlich besteht auch die Möglichkeit, den Befestigungswinkel 440 direkt an das untere Ende der Führungsschiene 4a anzuformen. Bei Lockerung der Schraubverbindung 7a, 7b ist das untere Ende der Führungsschiene 4a innerhalb der vom Langloch 440a gebildeten Anschläge frei verschiebbar.

Die Einstellung des Neigungswinkels der Fensterscheibe 6 erfolgt jedoch grundsätzlich durch die Einstellmittel 430, 430b an der rechten Führungsschiene 4b. Hierfür ist eine Einstellschraube 430 vorgesehen, die mit einem (nicht dargestellten) Zapfen drehbar am Haltewinkel 43 lagert. Sie durchgreift eine Buchse 430b mit Innengewinde, die fest mit dem Türinnenblech 1b, zum Beispiel durch Schweißen verbunden ist. Mit einem Werkzeug kann in den Schlitz 430a der Einstellschraube 430 eingegriffen und durch Drehung eine Verstellung des unteren Endes der Führungsschiene quer zur Fahrzeuglängsachse vorgenommen werden. Diese Schwenkbewegung wird von der Fensterscheibe 6 auch auf die andere Führungsschiene 4a übertragen, so daß sich auch die Lage des Befestigungswinkels 440 bezüglich der Schraube 7a ändert.

Nachdem die vorgesehene Scheibenposition erreicht ist, wird die Einstellung der Fensterscheibe 6 abgeschlossen durch die Arretierung der Position der ersten Führungsschiene 4a mittels der Schraubverbindung 7a, 7b. Eine gleichzeitige Einstellung beider Führungsschienen 4a, 4b ist auf diese Weise durch nur einen Werker auf zuverlässige Weise möglich.

Würde man einen starren Gewindebolzen 430 einsetzen, der vorzugsweise auch zur Lagerung der Seilrolle dienen sollte, dann muß die Gewindebuchse 430b drehbar am Türblech 1b lagern und Mittel für den Angriff eines Werkzeugs zur Drehung der Gewindebuchse 430 vorsehen. Von Vorteil wäre es auch, wenn die Einstellung und Arretierung beider Führungsschienen 4a, 4b durch das Bodenblech 10 der Fahrzeugtür ermöglicht würde, damit auch eine spätere Scheibennachstellung in einfacher Weise durch den Türboden erfolgen kann, ohne die Türinnenverkleidung demontieren zu müssen.

### Bezugszeichenliste

- 1a: Türaußenblech
- 1b: Türinnenblech
- 10: Bodenblech

- 2: Antriebseinheit
- 20: Getriebe
- 21: Motor
- 22: Grundplatte
- 220: Befestigungsstelle
- 221: Befestigungsstelle

- 3: Bowdenrohr

- 4a: Führungsschiene
- 4b: Führungsschiene
- 40: Klemmbefestigung
- 41: Haltewinkel mit Seilrolle und Bowdenrohrabstützung
- 42: Haltewinkel mit Seilrolle und Bowdenrohrabstützung
- 43: Haltewinkel mit Seilrolle und Bowdenrohrabstützung
- 44: Haltewinkel mit Seilrolle und Bowdenrohrabstützung
- 410: Achse der Seilrolle
- 420: Achse der Seilroile
- 430: Einstellschraube
- 430a: Schlitz
- 430b: Gewindebuchse
- 440: Befestigungswinkel
- 440a: Langloch

- 5: Rohr/Aufprallschutz
- 6: Fensterscheibe
- 7a: Schraube
- 7b: Mutter

## Patentansprüche

1. Vorrichtung zum Einstellen einer von einem doppelsträngigen Seilfensterheber bewegten rahmenlosen Fensterscheibe durch eine Kippbewegung quer zur Längsachse des Kraftfahrzeugs, mit separaten Einstell- und Arretierungsmittel für jede der beiden Führungsschienen des doppelsträngigen Seilfensterhebers, wobei die Einstell- und Arretierungsmittel (440, 440a, 7a, 7b) der einen ersten Führungschiene (4a) des doppelsträngigen Seilfensterhebes eine Führung (440a) aufweisen, innerhalb derer die erste Führungsschiene (4a) im nichtarretierten Zustand im wesentlichen frei beweglich ist, und die Einstell- und Arretierungsmittel (430, 430a) der anderen zweiten Führungsschiene (4b) Mittel zur Zwangsverstellung (430) der Führungsschiene (4b) aufweisen.

2. Vorrichtung nach Anspruch 1, **dadurch gekennzeichnet, daß** die Führung der ersten Führungsschiene (4a) als Langloch (440a) ausgebildet ist, wobei das untere Ende der ersten Führungsschiene (4a) im nichtarretierten Zustand innerhalb der vom Langloch (440a) gebildeten Anschläge im wesentlichen frei verschiebbar ist.

3. Vorrichtung nach Anspruch 2, **dadurch gekennzeichnet, daß** das Langloch (440a) in einem mit der ersten Führungsschiene (4a) verbundenen Befestigungswinkel (440) ausgebildet ist.

4. Vorrichtung nach Anspruch 2 oder 3, **dadurch gekennzeichnet, daß** die erste Führungsschiene (4a) mittels einer Schraubverbindung (7a, 7b) im Langloch (440a) arretierbar ist.

5. Vorrichtung nach mindestens einem der Ansprüche 1 bis 4, **dadurch gekennzeichnet, daß** als Mittel zur Zwangsverstellung eine Schraub- oder Spindelverstellung mit Selbsthemmung, insbesondere eine Einstellschraube (430) mit selbsthemmendem Gewinde verwendet wird.

6. Vorrichtung nach Anspruch 5, **dadurch gekennzeichnet, daß** die Einstellschraube (430) der zweiten Führungsschiene (4b) in eine Lagerbuchse der zugeordneten Seilrolle eingreift.

7. Verfahren zum Einstellen einer von einem doppelsträngigen Seilfensterheber bewegten rahmenlosen Kraftfahrzeugfensterscheibe nach Anspruch 1, **dadurch gekennzeichnet, daß** zuerst die der zweiten Führungsschiene (4b) zugeordneten Mittel zur Zwangsverstellung (430) bis zum Erreichen der gewünschten Scheibenposition betätigt und arretiert werden, und daß anschließend die Position der ersten Führungsschiene (4a) mittels der ihr zugeordneten Einstell- und Arretierungsmittel (7a, 7b) arretiert wird.

## Claims

1. Device for adjusting a frameless window which is driven by a two-run cable window regulator, by a tilting movement perpendicular to the longitudinal axis of the vehicle with separate adjusting and locking means for each of the two guide rails of the two-run cable window regulator, wherein the adjusting and locking means (440, 440a, 7a, 7b) of the one first guide rail (4a) of the two-run cable window regulator have a guide (440a) within which the first guide rail (4a) is movable substantially freely when in the non-locked state, and the adjusting and locking means (430, 430a) of the other second guide rail (4b) have means for automatic displacement (430) of the guide rail (4b).

2. Device according to claim 1 **characterised in that** the guide of the first guide rail (4a) is formed as an oblong hole (440a) wherein the lower end of the first guide rail (4a) is movable substantially freely when in the non-locked state within the stops formed by the oblong hole (440a).

3. Device according to claim 2 **characterised in that** the oblong hole (440a) is formed in a fastening bracket (440) connected to the first guide rail (4a).

4. Device according to claim 2 or 3 **characterised in that** the first guide rail (4a) is lockable in the oblong hole (440a) by means of a screw connection (7a, 7b).

5. Device according to at least one of claims 1 to 4 **characterised in that** the means for automatic adjustment comprise a screw or spindle adjuster with self-locking action, more particularly an adjusting screw (430) with self-locking thread.

6. Device according to claim 5 **characterised in that** the adjusting screw (430) of the second guide rail (4b) engages in a bearing bush of the associated cable pulley.

7. Method for adjusting a frameless vehicle window driven by a two-run cable window regulator, according to claim 1 **characterised in that** first the automatic adjustment means (430) associated with the second guide rail (4b) are activated until reaching the desired window position when they are then locked, and that then the position of the first guide rail (4a) is locked by means of the adjusting and locking means (7a, 7b) associated therewith.

## Revendications

1. Dispositif pour ajuster une vitre de fenêtre sans cadre déplacée par un lève-vitre à câble à deux brins, par un basculement perpendiculaire à l'axe longitudinal du véhicule automobile, comportant des moyens d'ajustage et d'arrêt séparés pour chacun des deux rails de guidage du lève-vitre à câble à deux brins, dans lequel les moyens d'ajustage et d'arrêt (440, 440a, 7a, 7b) dudit premier rail de guidage (4a) du lève-vitre à câble à deux brins comprennent un guidage (440a) à l'intérieur duquel le premier rail de guidage (4a) est mobile sensiblement librement dans l'état non arrêté, et les moyens d'ajustage et d'arrêt (430, 430a) du second rail de guidage (4b) comprennent des moyens pour le déplacement forcé (430) du rail de guidage (4b).

2. Dispositif selon la revendication 1, **caractérisé en ce que** le guidage du premier rail de guidage (4a) est réalisé sous forme de trou oblong (440a), l'extrémité inférieure du premier rail de guidage (4a) étant mobile sensiblement librement, dans l'état non arrêté, à l'intérieur des butées formées par le trou oblong (440a).

3. Dispositif selon la revendication 2, **caractérisé en ce que** le trou oblong (440a) est ménagé dans une équerre de fixation (440) reliée au premier rail de guidage (4a).

4. Dispositif selon l'une ou l'autre des revendications 2 et 3, **caractérisé en ce que** le premier rail de guidage (4a) peut être arrêté au moyen d'un raccord vissé (7a, 7b) dans le trou oblong (440a).

5. Dispositif selon l'une quelconque des revendications 1 à 4, **caractérisé en ce qu'**il est prévu, à titre de moyens pour le déplacement forcé, un ajustage à vis ou à broche avec auto-freinage, en particulier une vis d'ajustage (430) à filetage auto-freinant.

6. Dispositif selon la revendication 5, **caractérisé en ce que** la vis d'ajustage (430) du second rail de guidage (4b) s'engage dans une douille de montage de la poulie à gorge associée.

7. Procédé pour ajuster une vitre de fenêtre sans cadre déplacée par un lève-vitre à câble à deux brins selon la revendication 1, **caractérisé en ce que** tout d'abord les moyens destinés au déplacement forcé (430) et associés au second rail de guidage (4b) sont actionnés, jusqu'à atteindre la position désirée de la vitre, et arrêtés, et ensuite la position du premier rail de guidage (4a) est arrêtée par l'intermédiaire des moyens d'ajustage et d'arrêt (7a, 7b) qui lui sont associés.
